# EUROPÄISCHE PATENTANMELDUNG

(11) **EP 2 345 860 A2**
(43) Veröffentlichungstag der Anmeldung: **20.07.2011**
(21) Anmeldenummer: 10192150.0
(22) Anmeldetag: 23.11.2010
(51) Int. Cl.: F25D 23/06

(54) **Kältegerät, insbesondere Haushaltskältegerät, sowie Verfahren zur Herstellung eines solchen Kältegerätes**

(30) Priorität: 04.12.2009 ES 200931120
(71) Anmelder: BSH Bosch und Siemens Hausgeräte GmbH, 81739 München (DE)
(72) Erfinder: Claramunt Farré, Victor, 31180 Cizur mayor (ES); Glaria Lecuona, Eduardo, 31192 Mutilva Baja (ES)

(57) **Zusammenfassung**

Die Erfindung betrifft ein Kältegerät, insbesondere Haushaltskältegerät, mit einem durch eine Beschickungsöffnung zugänglichen Nutzraum (3, 5), der von einem eine Materialstärke (s₁) aufweisenden Innenverkleidungsteil (1) begrenzt ist. Erfindungsgemäß ist in dem Innenverkleidungsteil (1) zumindest ein Versteifungsbereich (11) integriert, dessen Materialstärke (s₂) im Vergleich zur Materialstärke (s₁) des Innenverkleidungsteils (1) erhöht ist.

## Beschreibung

Die Erfindung betrifft ein Kältegerät, insbesondere Haushaltskältegerät, nach dem Oberbegriff des Patentanspruches 1, eine Kunststoffplatine zur Herstellung eines Innenverkleidungsteils für ein Kältegerät nach dem Oberbegriff des Patentanspruches 14 sowie ein Verfahren zur Herstellung eines solchen Kältegerätes nach dem Patentanspruch 15.

Ein Haushaltskältegerät weist üblicherweise einen Gerätekorpus mit einem einen Kühlraum begrenzenden Innenverkleidungsteil und einem Außenverkleidungsteil auf. Der Hohlraum zwischen dem Innenverkleidungsteil und dem Außenverkleidungsteil ist mit einem Wärmeisolierschaum gefüllt.

Das Innenverkleidungsteil des Kältegerätes kann aus thermoplastischem Kunststoff hergestellt sein. Zur Herstellung des Innenverkleidungsteiles kann ein entsprechendes Kunststoffrohmaterial in einem Extrusionsprozess verarbeitet werden und daraus eine dünnwandige Kunststoffplatine gebildet werden. Die Kunststoffplatine kann dann unter Wärmeeinwirkung in einem Tiefziehverfahren zu dem Innenverkleidungsteil geformt werden. Die Wandstärke des Innenverkleidungsteiles kann dabei einer Größenordnung von 3 bis 4mm liegen. Damit ist einerseits eine ausreichend große Formstabilität erreicht und andererseits ein einwandfreies Ziehverhalten im Tiefziehvorgang gewährleistet.

Da sämtliche Begrenzungswände des Kühlraums, d.h. die Seiten-, Rück-, Deck- und Bodenwände, materialeinheitlich und einstückig im Innenverkleidungsteil integriert sind, gestaltet sich die Herstellung des Innenverkleidungsteiles sehr materialaufwändig.

Die Aufgabe der Erfindung besteht darin, ein Kältegerät, insbesondere Haushaltskältegerät, eine Kunststoffplatine zur Herstellung eines Innenverkleidungsteils für das Kältegerät sowie ein Verfahren zur Herstellung eines solchen Kältegerätes bereitzustellen, bei dem der Materialaufwand zur Herstellung des Innenverkleidungsteils reduziert ist.

Die Aufgabe ist durch die Merkmale des Patentanspruches 1, 14 oder 15 gelöst. Bevorzugte Weiterbildungen der Erfindung sind in den abhängigen Unteransprüchen offenbart.

Gemäß dem kennzeichnenden Teil des Patentanspruches 1 ist in dem Verkleidungsteil zumindest ein Versteifungsbereich integriert, dessen Materialstärke im Vergleich zum Innenverkleidungsteil erhöht ist. Erfindungsgemäß wird daher das Innenverkleidungsteil mit unterschiedlichen Materialstärken vorgesehen. Dabei ist im Versteifungsbereich, der eine Formstabilität des Innenverkleidungsteiles gewährleistet, die Materialstärke erhöht. Außerhalb des Versteifungsbereiches kann dagegen das Innenverkleidungsteil mit reduzierter Materialstärke ausgeführt sein, wodurch insgesamt Kunststoffmaterial eingespart werden kann.

Fertigungstechnisch einfach kann der Versteifungsbereich ein materialeinheitlich und/oder einstückig im Innenverkleidungsteil ausgebildeter Formabschnitt sein. Der Versteifungsbereich kann dabei als ein Materialvorsprung im Innenverkleidungsteil eingearbeitet sein.

Bevorzugt kann der oben genannte Materialvorsprung in der von dem Nutzraum abgewandten Seite des Innenverkleidungsteils vorgesehen werden. Dadurch kann die Innenseite des Innenverkleidungsteiles ebenflächig ohne Vorsprünge ausgebildet werden.

Das Innenverkleidungsteil kann neben dem Versteifungsbereich einen Basisbereich aufweisen, der mit der reduzierten Materialstärke ausgelegt ist. Im Unterschied zum Versteifungsbereich kann der Basisbereich des Innenverkleidungsteiles lediglich eine reduzierte Tragfunktion übernehmen. Vor diesem Hintergrund kann sich der Versteifungsbereich zumindest teilweise entlang von Ecken und/oder Kanten erstrecken, die bei einer Krafteinleitung einen Kräftepfad bilden oder Trag- und Stützfunktionen übernehmen. Demgegenüber kann der Basisbereich mit reduzierter Wandstärke zur Ausbildung flächiger Wandabschnitte eingesetzt werden, die für die Formstabilität des Innenverkleidungsteils lediglich von nachrangiger Bedeutung sind.

Die Materialstärke des Versteifungsbereiches kann dabei in etwa doppelt so groß sein wie im Basisbereich des Innenverkleidungsteiles. Besonders bevorzugt kann die Materialstärke im Versteifungsbereich in einer Größenordnung von 4 bis 4,5 mm liegen, während die Materialstärke im Basisbereich bei 2 mm liegen kann.

Das Innenverkleidungsteil kann als ein tiefgezogenes schalenförmiges Kunststoffteil hergestellt sein, in dem bevorzugt sämtliche, den Nutzraum begrenzenden Boden-, Deck-, Rück- und Seitenwände materialeinheitlich und einstückig integriert sind. Als tiefziehfähiges Material eignet sich insbesondere thermoplastischer Kunststoff, der unter Wärmeeinwirkung tiefgezogen werden kann.

Untersuchungen haben ergeben, dass sich für eine besonders materialreduzierte Gestaltung des Innenverkleidungsteiles die Versteifungsbereiche insbesondere entlang vertikaler Kanten erstrecken können, bei denen die Rückwand in die Seitenwände des Innenverkleidungsteiles übergeht. Die Rückwand sowie die Seitenwände können dabei außerhalb der Versteifungsbereiche mit reduzierter Wandstärke ausgebildet werden. Ebenso kann die Deckwand und die Bodenwand mit reduzierter Wandstärke ausgebildet sein. Gegebenenfalls kann sich der Versteifungsbereich jedoch auch zumindest teilweise über die flächigen Begrenzungswände hinweg erstrecken.

Bevorzugt kann der Versteifungsbereich als zumindest ein, vorzugsweise streifenförmiger Materialvorsprung ausgebildet sein, der außenseitig auf dem Innenverkleidungsteil verläuft. Für eine günstige Aussteifung des Innenverkleidungsteils kann der Materialvorsprung den Nutzraum rahmenartig umgrenzen. Aus Gründen der Formstabilität ist es dabei besonders bevorzugt, wenn sich der streifenförmige Materialvorsprung in Einbaulage des Innenverkleidungsteils in einer Vertikalrichtung erstreckt.

In einer Ausführungsform kann der streifenförmige Materialvorsprung in etwa C-förmig um den Nutzraum verlaufen. Hierzu kann der streifenförmige Materialvorsprung ein deckwandseitiges Versteifungssegment und ein bodenwandseitiges Versteifungssegment aufweisen, die über ein rückwandseitiges Versteifungssegment miteinander verbunden sind.

Besonders bevorzugt kann das deckwandseitige Versteifungssegment entlang einer zwischen der Seitenwand und der Deckwand des Innenverkleidungsteils gebildeten horizontalen Kante verlaufen. Das rückwandseitige Versteifungssegment kann entlang einer vertikalen Kante zwischen der Seitenwand und der Rückwand des Innenverkleidungsteils verlaufen, während das bodenwandseitige Versteifungssegment entlang einer horizontalen Kante zwischen der Seitenwand und der Bodenwand des Innenverkleidungsteils verlaufen kann.

In einem bevorzugten Herstellungsverfahren kann das Innenverkleidungsteil vor dem Tiefziehvorgang als eine plattenförmige Kunststoffplatine ausgebildet sein. Die Kunststoffplatine kann ausgehend von einem Kunststoff-Rohmaterial in einem Extrusionsverfahren gefertigt werden. Dabei kann bereits bei der Fertigung der Kunststoffplatine ein von einer Basisfläche erhabener Materialvorsprung eingearbeitet werden, der nach dem Tiefziehvorgang den Versteifungsbereich bildet. Der Materialvorsprung kann fertigungstechnisch bevorzugt bereits beim Extrudieren in der Kunststoffplatine ausgebildet werden.

Für ein einfaches Extrudieren kann sich der Materialvorsprung in der Extrudierrichtung streifenförmig sowie parallel zu den Randseiten Kunststoffplatine erstrecken. Die geometrische Lage des streifenförmigen Materialvorsprunges kann dabei so gewählt sein, dass sich im nachfolgenden Tiefziehverfahren der Versteifungsbereich in den dafür vorgesehenen Eck- und Kantenabschnitten bildet.

Im Hinblick auf eine einfache Aussteifung des Innenverkleidungsteiles mit besonders großer Materialeinsparung hat es sich als vorteilhaft erwiesen, die Kunststoffplatine mit zwei voneinander beabstandeten, streifenförmigen Materialvorsprüngen auszubilden. Die Materialvorsprünge können quer zu einer Extrudierrichtung voneinander beabstandet sein und sich in der Extrudierrichtung über die gesamte Kunststoffplatine erstrecken. Die Lage der beiden Materialvorsprünge kann dabei so gewählt sein, dass sich der nach dem Tiefziehvorgang bildende Versteifungsbereich entlang der hinteren vertikalen Kanten zwischen den Rück- und Seitenwänden erstreckt.

Dabei können sich die streifenförmigen Materialvorsprünge bevorzugt parallel zu den Randseiten der Kunststoffplatine in der Extrudierrichtung erstrecken. Alternativ dazu kann der Verlauf der streifenförmigen Materialvorsprünge auf der Kunststoffplatine so angepasst sein, dass neben den oben erwähnten vertikalen Kanten zusätzliche weitere Kanten- und Eckbereiche mit erhöhter Wandstärke ausgebildet sind.

Nachfolgend sind zwei Ausführungsbeispiele der Erfindung anhand der beigefügten Figuren beschrieben.

Es zeigen:
- Fig. 1: ein Innenverkleidungsteil eines Kältegerätes gemäß dem ersten Ausführungsbeispiel;
- Fig. 2: eine für einen Tiefziehvorgang bereitgestellte Kunststoffplatine zur Herstellung des in der Fig. 1 gezeigten Innenverkleidungsteiles;
- Fig. 4 und 5: jeweils Ansichten des ersten mit einer vereinfachten Tiefziehen-Platine ausgeführten Ausführungsbeispiels; und
- Fig. 5 und 6: jeweils Ansichten des zweiten Ausführungsbeispiels entsprechend der Fig. 1 und 2.

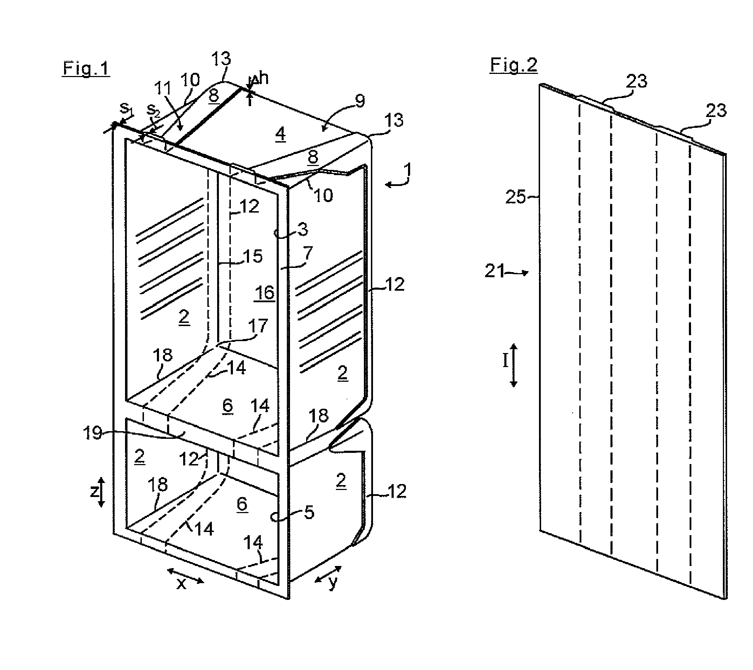

In der Fig. 1 ist ein Innenverkleidungsteil 1 eines Kältegerätes gemäß dem ersten Ausführungsbeispiel gezeigt. Das Innenverkleidungsteil 1 begrenzt einen oberen Kühlraum 3 sowie ein darunter angeordnetes Gefrierfach 5, die jeweils über frontseitige Beschickungsöffnungen zugänglich sind. Das Innenverkleidungsteil 1 umgibt zusammen mit einem hier nicht gezeigten Außenverkleidungsteil einen Hohlraum, der mit einem Wärmeisolierschaum gefüllt ist.

Wie aus der Fig. 1 weiter hervorgeht, sind die Begrenzungswände 2, 4, 6 des Kühlraums 3 sowie des Gefrierfaches 5 allesamt materialeinheitlich und einstückig in dem Innenverkleidungsteil 1 integriert, wobei die Beschickungsöffnungen frontseitig von einem angeformten Frontrahmen 7 umgeben sind.

Wie aus der Fig. 1 weiter hervorgeht, weist das Innenverkleidungsteil 1 Basisbereiche 9 sowie Versteifungsbereiche 11 unterschiedlicher Materialstärken _{S1}, _{S2} auf. Die Versteifungsbereiche 11 verlaufen dabei gemäß der Fig. 1 als streifenförmige, schmale Materialvorsprünge an der Außenseite des Innenverkleidungsteiles und sind um eine Höhendifferenz Δh von den dünnwandigen Basisbereichen 9 erhaben. Die Materialstärke s₁ der Basisbereiche 9 liegt in etwa bei 2mm, während die Materialstärke s₂ der Versteifungsbereiche 11 in einer Größenordnung von 4 bis 4, 5mm liegt.

Gemäß der Fig. 1 verlaufen die beiden streifenförmigen Materialvorsprünge 11 mit Bezug auf eine vertikale Mittelebene spiegelbildlich zueinander. Jeder der Materialvorsprünge 11 umgrenzt rahmenartig den oberen Kühlraum 3 sowie das untere Gefrierfach 5. Die Materialvorsprünge 11 verlaufen dabei in der Vertikalrichtung z ausgehend von einer oberen Rahmenleiste des Frontrahmens 7 bis zu dessen bodenseitiger Rahmenleiste.

Beginnend von der oberen Rahmenleiste des Frontrahmens 7 erstreckt sich gemäß der Fig. 1 jeder der beiden Materialvorsprüngen 11 mit einem deckwandseitigen Versteifungssegment 8 in der Bautiefenrichtung y nach hinten. Das deckwandseitige Versteifungssegment 8 verläuft dabei entlang einer horizontalen Kante 10 zwischen der Seitenwand 2 und der Deckwand 4 des Innenverkleidungsteils 1. Im hinteren oberen Eckbereich 13 des Innenverkleidungsteiles 1 geht das deckwandseitige Versteifungssegment 8 in ein rückwandseitiges Versteifungssegment 12 über, das entlang einer vertikalen Kante 15 zwischen der Seitenwand 2 und der Rückwand 16 des Innenverkleidungsteils 1 verläuft.

Im weiteren Verlauf geht das rückwandseitige Versteifungssegment 12 am unteren Eckbereich 17 in ein bodenwandseitiges Versteifungssegment 14 über. Das bodenwandseitige Versteifungssegment 14 erstreckt sich im Bereich einer zwischen der Seitenwand 2 und der Bodenwand 6 gebildeten horizontalen unteren Kante 18 bis zu einer mittleren Rahmenleiste 19 des Frontrahmens 7. Dadurch ergibt sich insgesamt ein in Seitenrichtung betrachtet etwa C-förmiger Verlauf der beiden Materialvorsprünge 11.

Ausgehend von der mittleren Rahmenleiste 19 erstrecken sich die beiden Materialvorsprünge 11 weiter um das Gefrierfach 5 herum bis zur unteren Bodenleiste des Frontrahmens 7. Der in etwa C-förmige Verlauf der Materialvorsprünge 11 um das Gefrierfach 5 ist dabei im Wesentlichen identisch mit dem Verlauf der Materialvorsprünge 11 um den Kühlraum 3, so das auf eine detailierte Beschreibung verzichtet werden kann.

Das in der Fig. 1 gezeigte Innenverkleidungsteil 1 ist aus einem thermoplastischen Kunststoff hergestellt, wobei die Formgebung des Innenverkleidungsteiles 1 im Tiefziehverfahren erfolgt. Hierzu wird zunächst das Kunststoff-Rohmaterial in einem Extrudiervorgang zu der in der Fig. 2 gezeigten Kunststoffplatine 21 geformt. Die Kunststoffplatine 21 ist plattenförmig gestaltet und weist zwei sich in Extrusionsrichtung I erstreckende Materialvorsprünge 23 auf, die von einer Grundfläche der Platine 21 vorragen.

Die Materialvorsprünge 23 erstrecken sich im Abstand zu Randseiten 25 der Kunststoffplatine 21 sowie parallel dazu. Die Lage der beiden Materialvorsprünge 23 auf der Kunststoffplatine 21 ist dabei derart angepasst, dass sich nach dem Tiefziehverfahren die Versteifungsbereiche 11 bilden.

Zur Vorbereitung des Tiefziehvorganges wird die Kunststoffplatine 21 mit ihrem Umfangsrand in eine Tiefziehvorrichtung eingespannt. Anschließend erfolgt unter Wärmeeinwirkung der Tiefziehvorgang, bei dem das in der Fig. 1 gezeigte Innenverkleidungsteil 1 hergestellt wird.

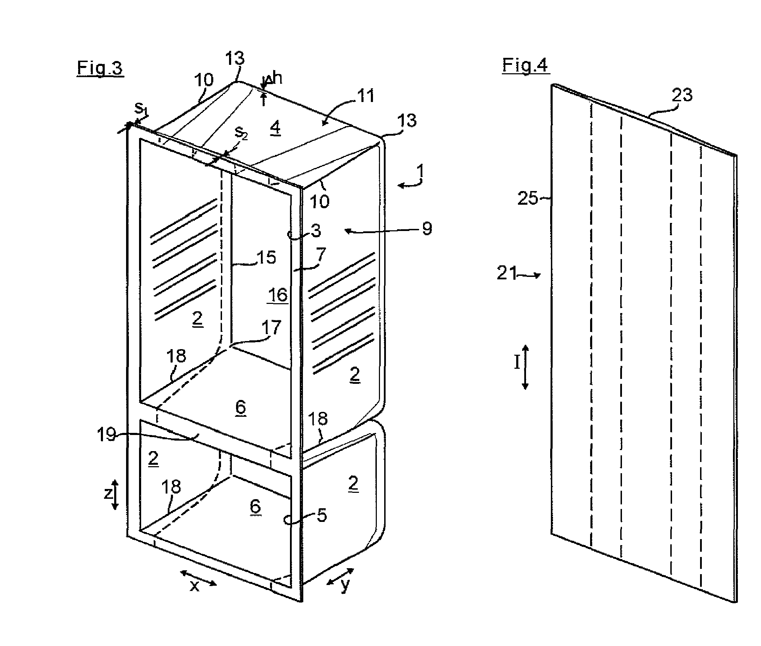

In Figur 3 ist ein Innenverkleidungsteil 1 wie dasjenige in Figur 1 gezeigt.

Wie auch aus Figur 3 hervorgeht, weist das Innenverkleidungsteil 1 sowohl Basisbereiche 9 als auch einen Versteifungsbereich 11 unterschiedlicher Materiastärken s₁, s₂ auf. Gemäß Figur 3 verläuft der Versteifungsbereich 11 hier als ein breiter, streifenförmiger Materialvorsprung, an der Außenseite des Innenverkleidungsteils, und er ist um einer Höhendifferenz Δh von den dünnwandigen Basisbereichen 9 erhaben. Die Materialstärke s₁ der Basisbereiche 9 beträgt ungefähr 2mm, während die Materialstärke s₂ der Verstärkungsbereiche 11 in einer Größenordung von 4 bis 4,5mm liegt.

Die in Figur 4 gezeigte Platine 21 ist plattenförmig gestaltet und weist einen sich in Extrusionsrichtung l erstreckende Materialvorsprung 23 auf, der von einer Grundfläche der Platine 21 vorragt.

Der Materialvorsprung 23 erhebt sich stufenweise von beiden Randseiten 25 der Kunststoffplatine 21 und spiegelbildlich in Bezug auf die Mitte. Der Gradient von der Platinenstärke an den Randseiten zur Stärke des Materialvorsprunges ist leicht, vorzugsweise bei 10% - 20% Höhenunterschied. Die Position des Materialvorsprunges 23 auf der Kunststoffplatine 21 ist in diesem Fall derart angepasst, dass nach dem Tiefziehverfahren der Versteifungsbereich 11 gebildet wird.

Gemäß Figur 3 verläuft der streifenförmige Materialvorsprung 11 zentriert zu den Verkleidungsseiten symmetrisch. Der Materialvorsprung 11 begrenzt rahmenartig die Rückwand 16 des oberen Kühlraumes 3 und des unteren Gefrierfaches 5, wobei Teil der Seitenwände 2 abgedeckt wird. In ähnlicher Weise wie in Figur 1 beschrieben verläuft der Materialvorsprung 11 dabei in Vertikalrichtung z, ausgehend von einer oberen Rahmenleiste des Frontrahmens 7 bis zur seitlichen Rahmenleiste dessen Boden.

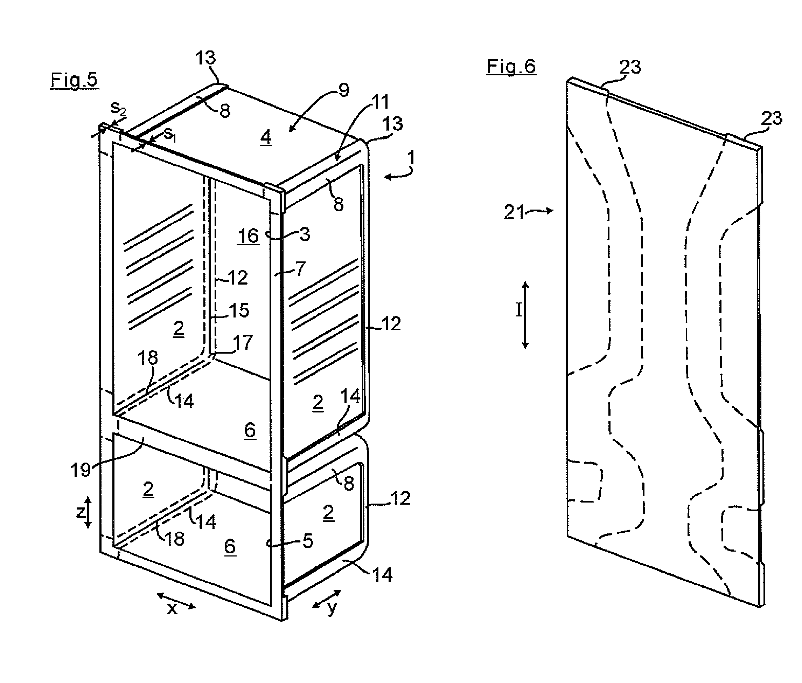

In der Fig. 5 ist ein Innenverkleidungsteil 1 gemäß dem zweiten Ausführungsbeispiel gezeigt, dessen grundsätzlicher Aufbau identisch mit dem Innenverkleidungsteil der Fig. 1 ist.

Wie aus der Fig. 5 hervorgeht, sind auch hier die beiden streifenförmigen Versteifungsbereiche 11 mit Bezug zu einer vertikalen Mittelebene spiegelbildlich angeordnet. Die Versteifungsbereiche 11 sind demzufolge ebenfalls C-förmig mit einem deckwandseitigen Versteifungssegment 8 sowie mit einem vertikalen rückwandseitigen Versteifungssegment 12 und mit einem bodenwandseitigen Versteifungssegment 14 gebildet, die den Kühlraum 3 umziehen.

Im Unterschied zur Fig. 1 sind die beiden horizontalen oberen und unteren Versteifungssegmente 8, 14 unmittelbar in den oberen und unteren Kanten 10, 18 angeordnet, die sich in Bautiefenrichtung y nach hinten erstrecken. Demzufolge verläuft das obere Versteifungssegment 8 des Materialvorsprunges 11 ausgehend von dem jeweils oberen Eckbereich des Frontrahmens 7 entlang der Kante 10 bis zum hinteren Eckbereich 13. Im weiteren Verlauf erstreckt sich das vertikale Versteifungssegment 12 bis zum unteren Eckbereich 17. Ausgehend vom unteren Eckbereich 17 verläuft das untere horizontale Versteifungssegment 14 entlang der unteren Kante 18 wieder nach vorne bis zur mittleren Rahmenleiste 19 des Frontrahmens 7. In analoger Weise sind die Materialvorsprünge 11 auch um das untere Gefrierfach 5 geführt, wie es aus der Fig. 5 hervorgeht.

In der Fig. 6 ist eine Kunststoffplatine 21 gezeigt, aus der das Innenverkleidungsteil 1 gemäß der Fig. 5 tiefgezogen werden kann. Im Unterschied zur Fig. 2 sind die Materialvorsprünge 23 der Kunststoffplatine 21 nicht mehr in Extrusionsrichtung l geradlinig geführt, sondern weisen diese Krümmungen auf. Dadurch kann die geometrische Lage der Versteifungsbereiche 11 im Innenverkleidungsteil 1 der Fig. 5 gewährleistet werden.

### BEZUGSZEICHENLISTE

- 1: Innenverkleidungsteil
- 2: Seitenwände
- 3: Kühlraum
- 4: Deckwand
- 5: Gefrierfach
- 6: Bodenwand
- 7: Frontrahmen
- 8: deckwandseitiges Versteifungssegment
- 9: Basisbereich
- 10: obere Kante
- 11: Versteifungsbereich
- 12: rückwandwandseitiges Versteifungssegment
- 13: hinterer oberer Eckbereich
- 14: bodenwandseitiges Versteifungssegment
- 15: vertikale Kanten
- 16: Rückwand
- 17: hinterer unterer Eckbereich
- 18: untere Kante
- 19: mittlere Rahmenleiste
- 21: Kunststoffplatine
- 23: Materialvorsprünge
- 25: Randseiten
- s₁: Materialstärke des Basisbereiches 9
- s₂: Materialstärke des Versteifungsbereiches 11
- Δh: Höhendifferenz
- x: Geräteseitenrichtung
- y: Bautiefenrichtung
- z: Vertikalrichtung
- l: Extrusionsrichtung

## Patentansprüche

1. Kältegerät, insbesondere Haushaltskältegerät, mit einem durch eine Beschickungsöffnung zugänglichen Nutzraum (3, 5), der von einem eine Materialstärke (s₁) aufweisenden Innenverkleidungsteil (1) begrenzt ist, **dadurch gekennzeichnet, dass** in dem Innenverkleidungsteil (1) zumindest ein Versteifungsbereich (11) integriert ist, dessen Materialstärke (s₂) im Vergleich zur Materialstärke (s₁) des Innenverkleidungsteils (1) erhöht ist.

2. Kältegerät nach Anspruch 1, **dadurch gekennzeichnet, dass** der Versteifungsbereich (11) ein materialeinheitlich und/oder einstückig mit dem Innenverkleidungsteil (1) ausgebildeter Formabschnitt ist.

3. Kältegerät nach Anspruch 1 oder 2, **dadurch gekennzeichnet, dass** sich der Versteifungsbereich (11) zumindest teilweise entlang von Ecken (13, 17) und/oder Kanten (15) des Innenverkleidungsteils (1) erstreckt.

4. Kältegerät nach einem der vorhergehenden Ansprüche, **dadurch gekennzeichnet, dass** das Innenverkleidungsteil (1) ein tiefgezogenes Kunststoffteil ist, und/oder Boden-, Deck-, Rück- und Seitenwänden ausgebildet ist die den Nutzraum (3, 5) begrenzen.

5. Kältegerät nach einem der vorhergehenden Ansprüche, **dadurch gekennzeichnet, dass** die Materialstärke (s₂) im Versteifungsbereich (11) des Innenverkleidungsteils (1) in etwa doppelt so groß wie die Materialstärke (s₁) im Übrigen Innenverkleidungsteil (1) ist, wobei die Materialstärke (s₁) in einer Größenordnung von 2 mm und die Materialstärke (s₂) in einer Größenordnung von 4 bis 4,5 mm liegt.

6. Kältegerät nach einem der vorhergehenden Ansprüche, **dadurch gekennzeichnet, dass** der Versteifungsbereich (11) als zumindest ein, vorzugsweise streifenförmiger Materialvorsprung ausgebildet ist und/oder außenseitig am Innenverkleidungsteil (1) angeordnet ist.

7. Kältegerät nach Anspruch 6, **dadurch gekennzeichnet, dass** der streifenförmige Materialvorsprung (11) den Nutzraum (3, 5) rahmenartig umgrenzt.

8. Kältegerät nach einem der Ansprüche 6 oder 7, **dadurch gekennzeichnet, dass** der streifenförmige Materialvorsprung (11) in Einbaulage des Innenverkleidungsteils (1) sich in Vertikalrichtung (z) erstreckt.

9. Kältegerät nach einem der Ansprüche 6 bis 8, **dadurch gekennzeichnet, dass** der streifenförmige Materialvorsprung (11) ein deckwandseitiges Versteifungssegment (8) und ein bodenwandseitiges Versteifungssegment (14) aufweist, die über ein rückwandseitiges Versteifungssegment (12) miteinander verbunden sind.

10. Kältegerät nach Anspruch 9, **dadurch gekennzeichnet, dass** das deckwandseitige Versteifungssegment (8) entlang einer horizontalen Kante (10) zwischen der Seitenwand (2) und der Deckwand (4) des Innenverkleidungsteils (1) verläuft, das rückwandseitige Versteifungssegment (12) entlang einer vertikalen Kante (15) zwischen der Seitenwand (2) und der Rückwand (16) des Innenverkleidungsteils (1) verläuft, und/oder das bodenwandseitige Versteifungssegment (14) entlang einer horizontalen Kante (18) zwischen der Seitenwand (2) und der Bodenwand (6) des Innenverkleidungsteils (1) verläuft.

11. Kältegerät nach einem der vorhergehenden Ansprüche, **dadurch gekennzeichnet, dass** das Innenverkleidungsteil (1) vor dem Tiefziehvorgang eine Kunststoffplatine (21) ist, die zumindest einen, von einer Grundfläche der Kunststoffplatine (21) erhabenen Materialvorsprung (23) aufweist, der nach dem Tiefziehvorgang den Versteifungsbereich (11) bildet.

12. Kältegerät nach Anspruch 11, **dadurch gekennzeichnet, dass** der Verlauf des Materialvorsprungs (23) auf der Kunststoffplatine (21) derart angepasst ist, dass der sich nach dem Tiefziehverfahren bildende Versteifungsbereich (11) zumindest teilweise entlang der Kanten (10, 15, 18) und/oder Ecken (13, 17) des Innenverkleidungsteils (1) verläuft.

13. Kältegerät nach Anspruch 11 oder 12, **dadurch gekennzeichnet, dass** der Materialvorsprung (23) streifenförmig ausgebildet ist, und/oder sich parallel zu Randseiten (25) der Kunststoffplatine (21) erstreckt.

14. Kunststoffplatine zur Herstellung eines Innenverkleidungsteils (1) für ein Kältegerät nach einem der vorhergehenden Ansprüche, aus welcher Kunststoffplatine (21) in einem Formvorgang das Innenverkleidungsteil (1) herstellbar ist, **dadurch gekennzeichnet, dass** die Kunststoffplatine (21) zumindest einen, von einer Grundfläche der Kunststoffplatine (21) erhabenen Materialvorsprung (23) aufweist, der nach dem Formvorgang einen, eine erhöhte Materialstärke (s₂) aufweisenden Versteifungsbereich (11) des Innenverkleidungsteiles (1) bildet.

15. Verfahren zur Herstellung eines Innenverkleidungsteils (1) für ein Kältegerät nach einem der vorhergehenden Ansprüche, wobei in dem Verfahren insbesondere in einem ersten Fertigungsschritt, insbesondere Extrusionsschritt, eine Kunststoffplatine (21) bereitgestellt wird, und in einem zweiten Fertigungsschritt durch Formen der Kunststoffplatine (21) das Innenverkleidungsteil (1) hergestellt wird.
